(19) **Europäisches Patentamt**
**European Patent Office**
**Office européen des brevets**

(11) **EP 4 087 758 B1**

(12) **EUROPÄISCHE PATENTSCHRIFT**

(45) Veröffentlichungstag und Bekanntmachung des Hinweises auf die Patenterteilung:
**16.10.2024 Patentblatt 2024/42**

(21) Anmeldenummer: **21700493.6**

(22) Anmeldetag: **07.01.2021**

(51) Internationale Patentklassifikation (IPC):
**B60T 8/88** *(2006.01)* **B60T 17/22** *(2006.01)*

(52) Gemeinsame Patentklassifikation (CPC):
**B60T 8/885; B60T 17/221;** B60T 2270/406;
B60T 2270/413

(86) Internationale Anmeldenummer:
**PCT/EP2021/050157**

(87) Internationale Veröffentlichungsnummer:
**WO 2021/140134 (15.07.2021 Gazette 2021/28)**

(54) **VERFAHREN ZUR FEHLERERKENNUNG IN EINER BREMSANLAGE EINES KRAFTFAHRZEUGS UND KRAFTFAHRZEUG-BREMSSYSTEM**

METHOD FOR IDENTIFYING FAULTS IN A BRAKE SYSTEM OF A MOTOR VEHICLE, AND MOTOR VEHICLE BRAKE SYSTEM

PROCÉDÉ DE DÉTECTION DE DÉFAUT DANS UN SYSTÈME DE FREINAGE D'UN VÉHICULE À MOTEUR ET SYSTÈME DE FREINAGE DE VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.01.2020 DE 102020100274**

(43) Veröffentlichungstag der Anmeldung:
**16.11.2022 Patentblatt 2022/46**

(73) Patentinhaber: **KNORR-BREMSE Systeme für Nutzfahrzeuge GmbH
80809 München (DE)**

(72) Erfinder: **WÖRNER, Dieter
75031 Eppingen (DE)**

(56) Entgegenhaltungen:
EP-A1- 3 354 523  WO-A1-2018/099864
DE-A1- 102016 115 275  US-A1- 2004 195 050
US-A1- 2019 023 252

**Beschreibung**

Die vorliegende Erfindung betrifft ein Verfahren zur Fehlererkennung in einer Bremsanlage eines Kraftfahrzeugs, wie beispielsweise eines PKWs, LKWs oder eines anderen Nutzfahrzeugs, sowie ein Bremssystem eines solchen Kraftfahrzeugs.

Verfahren zur Fehlererkennung basieren darauf, Temperaturen an der Bremsanlage, insbesondere an Bremsbelägen und Bremsscheiben, zu erfassen, und werden verwendet, um eine Schädigung der Bremsanlage durch zu hohe Bremstemperaturen möglichst zu verhindern.

EP 3 354 523 A1 offenbart ein Fehlererkennungssystem zum Erkennen von Fehlern in Bezug auf ein Flugzeugbremssystem, das eine Bremse umfasst. Das Erkennungssystem umfasst eine Steuerung, die zum Empfangen von Bremsanforderungsinformationen konfiguriert ist; Drehmomentinformationen; Verschleißinformationen; Informationen zur Radgeschwindigkeit; und Informationen zur Bremstemperatur. Die Steuerung soll eine erwartete maximale Temperatur der Bremse basierend auf den Drehmomentinformationen, den Verschleißinformationen und den Radgeschwindigkeitsinformationen berechnen; um zu bestimmen, ob eine signifikante Temperaturabweichung zwischen der erwarteten Maximaltemperatur und den Bremstemperaturinformationen besteht; um basierend auf den Bremsanforderungsinformationen und den Drehmomentinformationen zu bestimmen, ob eine signifikante drehmomentbezogene Diskrepanz vorhanden ist.

US 2019/023252 A1 offenbart, dass beim Erkennen einer falsch eingestellten Bremskomponente an einem Nutzfahrzeug die Radendentemperatur als Funktion des Widerstands bestimmt wird, der von einem Radgeschwindigkeitssensor an einem Radende gemessen wird. Die gemessene Temperatur wird mit durch ein thermisches Modell definierten niedrigen und hohen Temperaturschwellenwerten sowie mit einer oder mehreren anderen Raddrehzahlsensortemperaturen verglichen. Wenn die gemessene Temperatur unter dem niedrigen Temperaturschwellenwert liegt und sich wesentlich von dem einen oder den mehreren anderen Radgeschwindigkeitssensoren unterscheidet, wird die Bremse als zu niedrig eingestellt bestimmt und die Bremskraft an der zu niedrig eingestellten Bremse wird erhöht.

DE 10 2016 115275 A1 offenbart eine Bremsendiagnoseeinrichtung. Die Einrichtung weist einen Sensor zum Erfassen einer aktuellen Temperatur einer Umgebung der Bremse, einen Sensor zum Erfassen einer aktuellen Relativgeschwindigkeit (vf) zwischen einer Bremsscheibe und einem -belag, eine Einrichtung, die konfiguriert ist, eine aktuelle Normalkraft des Bremsbelags auf die -scheibe zu bestimmen, eine Speichereinrichtung, die konfiguriert ist, Parameter für eine Reibungskoeffizientenabschatzung abzuspeichern, eine Reibungskoeffizientenabschätzungseinheit, die konfiguriert ist, einen aktuellen Reibungskoeffizienten ($\mu$a) zwischen dem Bremsbelag und der -scheibe basierend auf der aktuellen Normalkraft, der aktuellen Relativgeschwindigkeit (vf) und einer aktuellen Temperatur einer Bremsscheibenreibfläche (Ts) abzuschätzen, und eine Temperaturabschätzungseinheit, die konfiguriert ist, die aktuelle Temperatur der Bremsscheibenreibfläche (Ts) basierend auf der aktuellen Normalkraft, der aktuellen Relativgeschwindigkeit (vf), dem aktuellen Reibungskoeffizienten ($\mu$a),, Wärmekapazitäten der Bremsscheibe, einer Wärmeübertragung zwischen der Bremsscheibenreibfläche und einem Bremsscheibenkörper und der Umgebung der Bremse abzuschätzen, und eine Bremsscheibenreibflächentemperaturwarneinrichtung, die konfiguriert ist ein Signal auszugeben, wenn die aktuelle Temperatur der Bremsscheibenreibfläche einen vorbestimmten Bremsscheibenreibflächentemperaturgrenzwert erreicht, auf.

Bisherige Verfahren sind häufig zu ungenau und/oder zu langsam in der Temperaturerfassung und/oder sehr aufwändig in der Implementierung.

Demzufolge wäre es wünschenswert, ein Verfahren zur Fehlererkennung in einer Bremsanlage eines Kraftfahrzeugs bereitzustellen, das einen guten Kompromiss aus zeitnaher Temperaturanalyse mit hinreichender Genauigkeit und Zuverlässigkeit auf der einen Seite und vertretbarer Komplexität in der Implementierung auf der anderen Seite ermöglicht.

Beispielhafte Ausführungsformen der Erfindung umfassen ein Verfahren zur Fehlererkennung in einer Bremsanlage eines Kraftfahrzeugs gemäß Anspruch 1 und ein Kraftfahrzeug-Bremssystem gemäß Anspruch 10. Weitere Ausführungsformen der Erfindung sind in den abhängigen Ansprüchen gegeben.

Beispielhafte Ausführungsformen der Erfindung umfassen ein Verfahren zur Fehlererkennung in einer Bremsanlage eines Kraftfahrzeugs, das die folgenden Schritte aufweist: Ermitteln eines ersten Schätzwerts einer Bremstemperatur anhand eines eingesteuerten / aufgebrachten / angelegten Bremsdrucks, d.h. eines Bremsdrucks, der auf die Bremsanlage einwirkt, um eine Bremskraft zu erzeugen; Erfassen einer Reihe von Temperaturmesswerten durch einen zur Bremsanlage beabstandet angeordneten Temperatursensor; Bestimmen eines zweiten Schätzwerts der Bremstemperatur basierend auf der Reihe von Temperaturmesswerten; Vergleichen des ersten Schätzwerts und des zweiten Schätzwerts; und basierend auf dem Vergleichen des ersten und zweiten Schätzwerts, Entscheiden, ob ein Fehler vorliegt.

Unter der Reihe von Temperaturmesswerten ist hierbei eine Reihe von mindestens zwei Werten zu verstehen, wobei diese Werte in regelmäßigen oder unregelmäßigen Abständen über die Zeit erfasst werden können. Die Werte der Reihe können aufeinanderfolgend erfasste Werte oder nicht-aufeinanderfolgend erfasste Werte sein. Der Begriff "Temperaturmesswerte" beschreibt hierbei Temperaturen, welche in Korrelation mit der Bremstemperatur stehen, d.h. von der Bremstemperatur abhängig sind.

Beispielhafte Ausführungsformen der Erfindung ermöglichen eine zuverlässige Fehlererkennung durch einen Vergleich von zwei auf unterschiedlichen Wegen gewonnen Schätzwerten der Bremstemperatur. Da der erste Schätzwert ohne Temperaturmessungen, sondern nur auf Basis von im Bremssystem bekannten Parametern ermittelt werden kann und da der zweite Schätzwert mit Hilfe eines von der Bremsanlage beabstandet angeordneten Sensors bestimmt werden kann, ist die Implementierung des Verfahrens nicht darauf angewiesen, die Bremstemperatur in dem schwer zugänglichen und komplex zu handhabenden Bereich der Bremsanlage selbst zu messen. Es kann bei einer vergleichsweise einfachen Installation der für das Verfahren benutzten Komponenten eine Fehlererkennung mit hoher Zuverlässigkeit erreicht werden. Auch kann durch das Bestimmen des zweiten Schätzwerts über eine Reihe von vergangenen Temperaturmesswerten erreicht werden, dass der zweite Schätzwert zeitnah vorliegt, auch wenn durch den Abstand zwischen Temperatursensor und Bremsanlage eine zeitliche Verzögerung bei der Erwärmung vorliegt. Somit ist eine zeitnahe und zuverlässige Fehlererkennung möglich.

Die für ein beispielhaftes, erfindungsgemäßes Verfahren verwendeten Komponenten sind bereits in einem Fahrzeug vorhanden und/oder können vergleichsweise leicht installiert werden, weshalb das Verfahren mit vergleichsweise geringem Aufwand implementierbar ist. Im Vergleich zu Verfahren, die die Bremstemperatur nur basierend auf einer geschätzten Bremstemperatur über den angelegten Bremsdruck ermitteln, berücksichtigt das erfindungsgemäße Verfahren auch Temperaturveränderungen aufgrund von möglichen mechanischen Defekten oder aufgrund von Effekten anderer Fehler, bspw. von Fehlern in der Pneumatik, in der Hydraulik oder in einem defekten Lager. Die Fehlererkennung ist dadurch umfassender. Gegenüber den Verfahren, die die Bremstemperatur nur über eine an dem Radgeschwindigkeitssensor gemessene Temperatur schätzen, kann das erfindungsgemäße Verfahren zeitnäher Fehler detektieren und kann es somit ermöglichen, einen Fehler in der Bremsanlage zu erkennen, bevor es zu einer Schädigung kommt. Verglichen mit Verfahren, welche einen Temperatursensor direkt an der Bremse vorsehen, kann der erfindungsgemäße Verfahren mit deutlich weniger Aufwand und somit mit deutlich geringeren Kosten implementiert werden, ohne signifikant an der Zuverlässigkeit der Fehlererkennung einzubüßen. Das erfindungsgemäße Verfahren kommt ohne einen Temperatursensor direkt an der Bremse aus, welcher schwer zugänglich / schwer zu installieren ist und welcher sehr hohen mechanischen Anforderungen genügen muss.

Gemäß einer weiteren Ausführungsform wird das Ermitteln des ersten Schätzwerts der Bremstemperatur anhand des eingesteuerten / aufgebrachten / angelegten Bremsdrucks und einer momentanen Radgeschwindigkeit durchgeführt. Die Berücksichtigung der Radgeschwindigkeit ermöglicht es, den ersten Schätzwert besonders genau zu ermitteln, da die Bremstemperatur neben dem angelegten Bremsdruck auch durch die momentane Geschwindigkeit des Fahrzeugs beeinflusst wird. Die momentane Radgeschwindigkeit kann eine gemessene / erfasste Radgeschwindigkeit sein oder von einer bekannten Größe, wie z.B. der Geschwindigkeit des Kraftfahrzeugs, abgeleitet sein.

Das Bestimmen des zweiten Schätzwerts der Bremstemperatur wird basierend auf der Reihe von Temperaturmesswerten und einer darauf angewendeten Funktion durchgeführt. Eine solche Funktion kann auch als Schätzfunktion bezeichnet werden. Die Funktion ermöglicht es, in definierter, wiederholbarer Weise den zweiten Schätzwert mit hoher Genauigkeit zu bestimmen. Die Funktion kann die Reihe von Temperaturmesswerten, einen Ausschnitt der Reihe von Temperaturmesswerten oder verschiedene Werte aus der Reihe von Temperaturmesswerten berücksichtigen.

Die Funktion ist eine Extrapolationsfunktion. Eine Extrapolationsfunktion ermöglicht es, basierend auf der Reihe von Temperaturmesswerten, Temperaturschätzwerte zu bestimmen, die den Trend der Temperaturmesswerte berücksichtigen. Auf diese Weise kann aus dem Trend an dem beabstandet angeordneten Temperatursensor, an dem Temperaturänderungen der Bremse eigentlich erst zeitlich verzögert ankommen, auf die momentane Temperatur an der Bremse, d.h. auf die "Bremstemperatur", geschlossen werden. Der Begriff Extrapolationsfunktion soll jede Funktion umfassen, die den Trend der Temperaturmesswerte, insbesondere der letzten Temperaturmesswerte berücksichtigt.

Gemäß einer weiteren Ausführungsform wird das Bestimmen des zweiten Schätzwerts der Bremstemperatur basierend auf einem Temperaturgradienten durchgeführt. Dabei wird der Gradient insbesondere anhand der Reihe von Temperaturmesswerten ermittelt. Der Gradient kann die Ableitung einer durch die Reihe von Temperaturmesswerten gelegten Kurve sein. Es ist auch möglich, den Gradienten über ein Gradienten-Filter oder über eine lineare Regression oder auf eine andere geeignete Weise zu bestimmen. Der Gradient kann wiederum Eingangsgröße einer Funktion zur Bestimmung des zweiten Schätzwerts sein.

Gemäß einer weiteren Ausführungsform wird entschieden, dass ein Fehler vorliegt, wenn der zweite Schätzwert von dem ersten Schätzwert zumindest um eine vorbestimmte Abweichung verschieden ist. Da je nach Fahrzeugtyp und Bremsanlage Abweichungen zwischen den ersten und zweiten Schätzwerten auftreten können, die jedoch keinen Fehler bedingen, kann die Abweichung, die als Schwellwert für eine Fehlererkennung eingesetzt wird, Bremsanlagen-spezifisch vorab bestimmt werden.

Gemäß einer weiteren Ausführungsform ist die vorbestimmte Abweichung, beispielsweise eine Differenz zwischen dem ersten und dem zweiten Schätzwert, mindestens 10%, insbesondere zwischen 10% und 30%, weiter insbesondere 20%, des ersten Schätzwerts. Die prozentuale Abweichung ergibt sich hierbei aus dem Betrag der Abweichung, bspw. der Differenz, relativ zum ersten Schätzwert. Wie vorstehend beschrieben, kann die als Schwellwert für die Fehlererkennung vorbestimmte Abweichung dabei abhängig von den Eigenschaften der Komponenten der Bremsanlage sein.

Zusätzlich oder alternativ kann auch die Differenz bzw. der Betrag der Abweichung als absolute Abweichung herangezogen werden. Beispielsweise kann entschieden werden, dass nur dann ein Fehler vorliegt, wenn die absolute Abweichung einen vorbestimmten Schwellenwert überschreitet. Da bei niedrigen Temperaturen eine prozentuale Abweichung, insbesondere eine prozentuale Abweichung von 10% bis 30%, einem geringen absoluten Unterschied entspricht, kann die zusätzliche Heranziehung der absoluten Abweichung zu einer besonders zuverlässigen Fehlerdetektion führen.

Gemäß einer weiteren Ausführungsform weist die Funktion mindestens einen Funktionsparameter auf. Der mindestens eine Funktionsparameter ist dabei ein experimentell bzw. ein durch Messung bestimmter Parameter. Ein solcher Parameter kann fahrzeugspezifisch sein und beispielsweise durch Fahrzeugmessungen auf einem Prüfstand ermittelt werden. Durch eine solche experimentelle Bestimmung kann eine sehr genaue Ermittlung des Parameters bzw. der Parameter ermöglicht werden.

Gemäß einer weiteren Ausführungsform weist die Funktion mindestens einen Funktionsparameter auf, der mindestens ein rechnerisch bzw. mittels computerbasierter Simulation bestimmter Parameter ist. Ein solcher Parameter kann fahrzeugspezifisch sein und insbesondere durch computerbasierte Simulation fahrzeugtypspezifisch ermittelt werden. Durch eine solche simulationsgestützte Bestimmung kann eine genaue Ermittlung des Parameters bzw. der Parameter ermöglicht werden, die etwas weniger aufwändig sein kann als die experimentelle Bestimmung.

Gemäß einer weiteren Ausführungsform weist die Funktion mindestens einen Funktionsparameter auf. Der Funktionsparameter ist dabei ein durch einen Lernprozess bestimmter Parameter. Der Lernprozess ist dabei insbesondere ein autonomer Lernprozess. Ein so bestimmter Parameter ist fahrzeugspezifisch, und der Lernprozess wird über einen vorbestimmten Zeitabschnitt zu Beginn der Nutzung des Fahrzeugs durchgeführt. Eine solche Bestimmung des Parameters kann besonders aufwandsarm implementiert werden.

Insbesondere, gemäß einer weiteren Ausführungsform besitzt der mindestens eine Funktionsparameter einen Initialwert, der in einer Mehrzahl von Zyklen basierend auf den ersten und zweiten Schätzwerten angepasst wird. Der Lernprozess umfasst dabei die Mehrzahl von Zyklen, in denen der Initialwert Zyklus für Zyklus basierend auf den in dem jeweiligen Zyklus ermittelten ersten und zweiten Schätzwerten angepasst werden kann. Aus dem Initialwert wird so nach Abschluss des Lernprozesses, also nach Durchlaufen der Mehrzahl von Zyklen, ein fahrzeugspezifischer Parameter.

Beispielhafte Ausführungsformen der Erfindung umfassen weiterhin ein Bremssystem eines Kraftfahrzeugs, mit einer Bremsanlage; einer Steuerung zur Aufbringung eines Bremsdrucks in der Bremsanlage; einem Sensor, der beabstandet zur Bremsanlage angeordnet ist und zum Erfassen einer Reihe von Temperaturmesswerten ausgelegt ist; und einer Signalverarbeitungseinheit, die mit der Steuerung und dem Sensor gekoppelt bzw. verbunden ist, wobei die Signalverarbeitungseinheit ausgelegt ist: einen ersten Schätzwerts einer Bremstemperatur anhand eines angelegten Bremsdrucks zu ermitteln; einen zweiten Schätzwerts der Bremstemperatur basierend auf der Reihe von Temperaturmesswerten zu bestimmen; den ersten Schätzwerts und den zweiten Schätzwerts zu vergleichen; und basierend auf dem Vergleichen des ersten und zweiten Schätzwerts, zu entscheiden, ob ein Fehler vorliegt. Die zusätzlichen Merkmale, Modifikationen und Effekte, wie oben bezüglich des Verfahrens beschrieben, gelten für das Bremssystem eines Kraftfahrzeugs analog.

Gemäß einer weiteren Ausführungsform ist der Sensor an einem Radträger, z.B. an einem Achsschenkel, an einem Bremsanker oder auf einer Radachse, z.B. mittels eines an der Radachse montierten Halters, angeordnet.

Gemäß einer weiteren Ausführungsform sind die Signalverarbeitungseinheit und die Steuerung integral miteinander oder separat zueinander ausgebildet. Eine integrale Ausbildung der Signalverarbeitungseinheit und der Steuerung ist insbesondere platzsparend, wohingegen die separate Ausbildung den Austausch von nur der Signalverarbeitungseinheit oder der Steuerung ermöglicht und somit eine höhere Adaptabilität besitzt.

Beispielhafte Ausführungsformen der Erfindung werden im Folgenden mit Bezug auf die beiliegenden Zeichnungen beschrieben.

Fig. 1    zeigt ein Bremssystem eines Kraftfahrzeugs gemäß einer beispielhaften Ausführungsform der Erfindung in einem Blockdiagramm.

Fig. 2    zeigt ein Flussdiagramm eines Verfahrens zur Fehlererkennung in einer Bremsanlage eines Kraftfahrzeugs gemäß einer beispielhaften Ausführungsform der Erfindung.

Fig. 3    zeigt ein Temperaturdiagramm mit beispielhaften Verlaufskurven eines ersten und eines zweiten Schätzwerts über die Zeit.

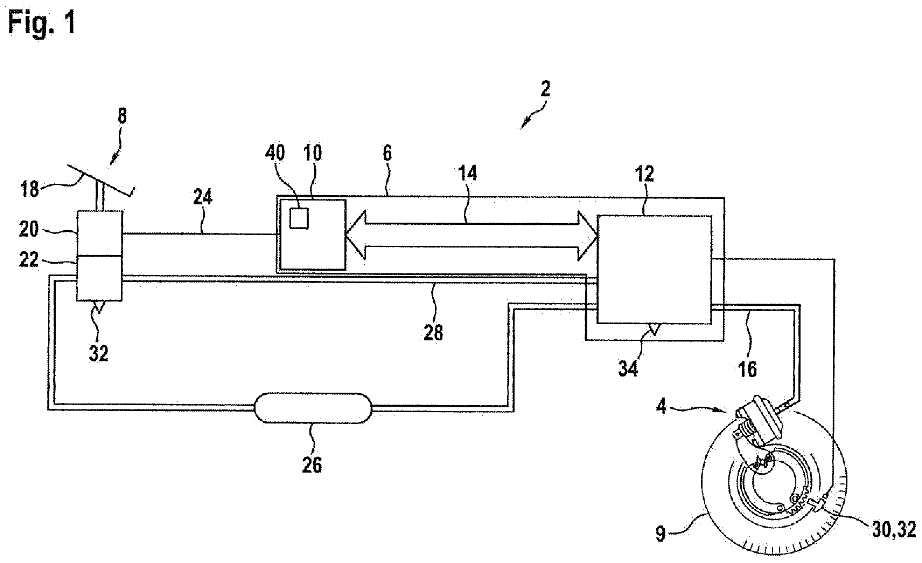

Fig. 1 zeigt ein Bremssystem 2 eines Kraftfahrzeugs gemäß einer beispielhaften Ausführungsform der Erfindung. Das Bremssystem 2 weist eine Bremsanlage 4, eine Steuerung 6 und einen Verzögerungsgeber 8 auf. Die Bremsanlage 4 ist an einem Rad 9 eines Kraftfahrzeugs (nicht dargestellt) angeordnet.

Die Steuerung 6 weist eine Steuereinheit 10 und eine Ventilanordnung 12 auf. Die Steuereinheit 10 ist über eine elektrische Verbindung 14, bspw. einem CAN-Bus, mit der Ventilanordnung 12 verbunden. Die Steuerung 6 ist eingerichtet, mittels der Ventilanordnung 12 über eine Druckluftleitung 16 einen gewünschten Bremsdruck an die Bremsanlage 4 anzulegen bzw. aufzubringen. Die Steuereinheit 10 und die Ventilanordnung 12 können integral ausgebildet oder separat voneinander vorgesehen sein.

Der Verzögerungsgeber 8 weist ein Bremspedal 18 auf, das sowohl mit einem elektrischen Sensor 20 als auch einem pneumatischen Sensor 22 verbunden ist. Der elektrische Sensor 20 erfasst die Stellung des Bremspedals 18 und übermittelt diese über eine elektrische Signalleitung 24 an die Steuereinheit 10. Der pneumatische Sensor 24 ist mit einem Druckluftvorrat 26 sowie über eine Druckluftleitung 28 mit der Ventilanordnung 12 verbunden. Der pneumatische Sensor 24 ist eingerichtet, die Stellung des Bremspedals 18 zu erfassen und basierend auf der Stellung des Bremspedals 18 einen entsprechenden Steuerdruck für die Ventilanordnung 12 auf der Druckluftleitung 28 bereitzustellen.

Wie vorstehend ausgeführt, ist die Steuereinheit 10 über die elektrische Signalleitung 24 mit dem elektrischen Sensor 20 verbunden. Die Steuereinheit 10 ist eingerichtet, basierend auf der Stellung des Bremspedals 18, wie von dem elektrischen Sensor 20 erfasst und übermittelt, einen gewünschten Bremsdruck zu berechnen und diesen gewünschten Bremsdruck über die Verbindung 14 an die Ventilanordnung 12 zu übermitteln.

Die Ventilanordnung 12 ist eingerichtet, den gewünschten Bremsdruck zum einen elektrisch über die Verbindung 14 von der Steuereinheit 10 zu empfangen und zum anderen pneumatisch über die Druckluftleitung 28 zu empfangen. Darüber hinaus ist die Ventilanordnung 12 ebenfalls mit dem Druckluftvorrat 26 pneumatisch verbunden und mit einem Radgeschwindigkeitssensor 30, welcher beabstandet zu der Bremsanlage 4 am Rad 9 angeordnet ist, elektrisch verbunden. Alternativ oder zusätzlich zu dem Radgeschwindigkeitssensor 30 können weitere Sensoren, wie bspw. ein Temperatursensor 32, an der gezeigten Stelle angeordnet sein. insbesondere kann der Temperatursensor 32 an einem Bremsanker, an einem Achsschenkel bzw. Radträger oder auf der Radachse, vorzugsweise mittels eines daran montierten Halters, angeordnet sein. Der Radgeschwindigkeitssensor 30 und der Temperatursensor 32 können auch an unterschiedlichen Positionen beabstandet zur Bremsanlage 4 angeordnet sein.

Der Vollständigkeit halber sei erwähnt, dass sowohl der pneumatische Sensor 22 als auch die Ventilanordnung 12 einen Auslassanschluss 32 bzw. 34 zur Atmosphäre aufweisen, über den der Druck in der jeweiligen Komponente, also dem pneumatischen Sensor 22 bzw. der Ventilanordnung 12, abgelassen werden kann.

Die Bremsanlage 4 ist schematisch als Einheit in dem Blockdiagramm von Fig. 1 dargestellt. Der Begriff Bremsanlage beinhaltet jegliche Art von Bremseinrichtung, die geeignet ist, mittels eines angelegten Bremsdrucks eine Bremswirkung auf ein Rad bzw. auf sich mit einem Rad drehende Elemente eines Fahrzeugs auszuüben.

Wird ein Bremsdruck an die Bremsanlage 4 angelegt, erwärmt sich diese während eines Bremsvorgangs. Ein Bremsvorgang beschreibt hierbei die Dauer, für die ein Bremsdruck an die Bremsanlage 4 angelegt ist und eine Bremswirkung erzeugt. Während des Bremsvorgangs erwärmt sich die Bremsanlage 4. Die in der Bremsanlage vorherrschende Temperatur wird hierin als Bremstemperatur bezeichnet. Wenn die Bremstemperatur, bspw. durch übermäßig lange und/oder starke Bremsvorgänge, zu hoch wird, kann die thermische Belastung Schäden an der Bremsanlage 4, bei Kraftfahrzeugbremsen insbesondere an Bremsscheiben und Bremsbelägen, verursachen und gegebenenfalls die Bremsleistung vermindern. Eine schädliche erhöhte Bremstemperatur kann auch durch mechanische Fehler in der Bremsanlage 4, bspw. durch Schleifen der Bremsbeläge an den Bremsscheiben, verursacht werden. Darüber hinaus können auch defekte Komponenten an der Radaufhängung, bspw. Lager an der Radnabe, eine ungewollte Erwärmung der Bremsanlage 4 verursachen, die zu Schäden und/oder einer Bremswirkungsminderung führen können.

Um solche Schäden an der Bremsanlage 4 zu vermeiden, sollte eine solche Temperaturentwicklung möglichst frühzeitig erkannt werden. Dadurch können entsprechende Maßnahmen ergriffen werden, bevor es zu Schäden an der Bremse und/oder zu einer Bremswirkungsminderung kommt.

Das Bremssystem 2 weist zu dem Zweck der Fehlererkennung eine Signalverarbeitungseinheit 40 auf. In der beispielhaften Ausführungsform der Fig. 1 ist die Signalverarbeitungseinheit 40 als Teil der Steuereinheit 10 ausgebildet. Es ist auch möglich, dass die Signalverarbeitungseinheit 40 an anderer Stelle im Bremssystem 2, insbesondere außerhalb der Steuerung 6, angeordnet ist. Die Funktionalität der Signalverarbeitungseinheit 40 kann auch an ganz anderer Stelle im Kraftfahrzeug, beispielsweise als Teil eines zentralen Kraftfahrzeug-Computers, ausgeführt sein. Da die Signalverarbeitungseinheit 40 bzw. die Funktionalität der Signalverarbeitungseinheit die Fehlererkennung im Bremssystem 2 betrifft, wird sie auch in dem zuletzt beschriebenen Fall als Teil des Bremssystems 2 angesehen,

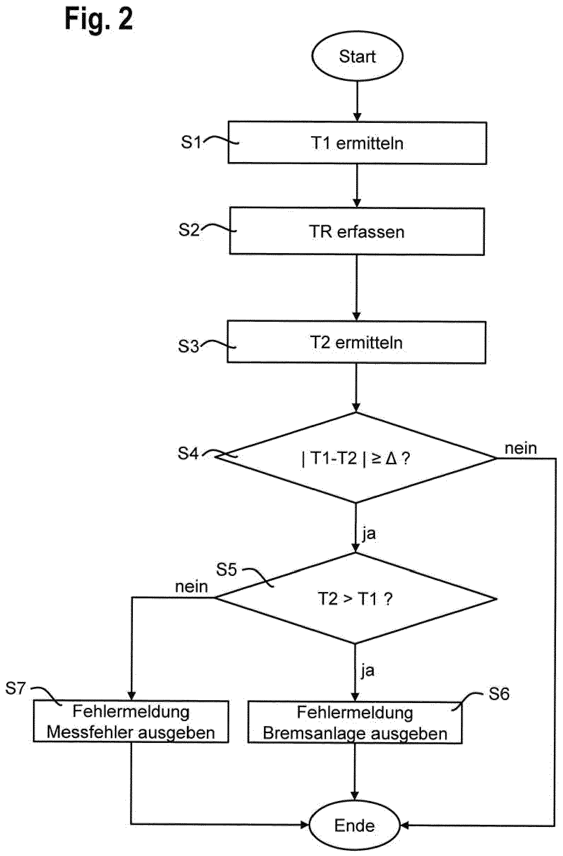

**Fig.** 2 zeigt ein Verfahren zur Fehlererkennung in der Bremsanlage 2 gemäß einer beispielhaften Ausführungsform der Erfindung anhand eines Flussdiagramms.

In einem ersten Schritt S1 wird ein erster Schätzwert T1 einer Temperatur der Bremsanlage 4, nachfolgend als Bremstemperatur TB bezeichnet, ermittelt. Der erste Schätzwert T1 wird basierend auf einem an der Bremsanlage 4 angelegten Bremsdruck ermittelt, zum Beispiel indem über den Bremsdruck die der Bremsanlage 4 zugeführte Energie berechnet wird. Mithilfe der Erwärmungscharakteristik und der Abkühlungscharakteristik der Bremsanlage 4 kann der erste Schätzwert T1 ermittelt werden. Für die Ermittlung des ersten Schätzwerts T1 wird also nur die Erwärmung durch den aktiv auf die Bremsanlage 4 aufgebrachten Bremsdruck berücksichtigt. Weiterhin wird für die Ermittlung des ersten Schätzwerts T1 ein normales, d.h. fehlerfreies, Funktionieren der Bremsanlage 4 angenommen.

Zur Bestimmung des ersten Schätzwerts T1 kann zusätzlich noch die Radgeschwindigkeit berücksichtigt werden, welche von dem Radgeschwindigkeitssensor 20 (siehe Fig. 1) erfasst wird. Außerdem können weitere Faktoren, wie bspw. die Umgebungstemperatur, berücksichtigt werden.

In einem zweiten Schritt S2 wird über den Temperatursensor 32 (siehe Fig. 1) eine Reihe von Temperaturmesswerten TR erfasst. Der Temperatursensor 32 ist beabstandet zur Bremsanlage 4 angeordnet und kann bspw. in den Radgeschwindigkeitssensor 30 integriert sein oder direkt benachbart zu diesem angeordnet sein.

Der Temperatursensor 32 erfasst bzw. sensiert eine an ihm anliegende Temperatur TS permanent. Die Reihe von Temperaturmesswerten TR weist zwei Temperaturmesswerte oder mehr auf, die über eine bestimmte Zeitspanne von dem Temperatursensor 32 erfasst wurden. Die Temperaturmesswerte, welche die Reihe von Temperaturmesswerten TR umfasst, können zeitlich direkt aufeinanderfolgende Temperaturen sein. Die Reihe von Temperaturmesswerten TR kann Temperaturmesswerte umfassen, welche regelmäßige oder unregelmäßige zeitliche Abstände zueinander aufweisen. Die von dem Temperatursensor 32 erfasste Temperatur TS entspricht nicht der Bremstemperatur TB der Bremsanlage 4, ist aber von dieser abhängig, d.h. es besteht eine Korrelation zwischen der von dem Temperatursensor 32 erfassten Temperatur TS und der Bremstemperatur TB.

Basierend auf der Reihe von Temperaturmesswerten TR wird in einem nächsten Schritt S3 ein zweiter Schätzwert T2 der Bremstemperatur TB bestimmt. Hierzu kann auf die Reihe von Temperaturmesswerten TR eine Funktion angewendet werden, wie bspw. eine Schätzfunktion, eine Extrapolationsfunktion etc.

Nach Bestimmung der beiden Schätzwerte T1, T2 der Bremstemperatur TB werden die beiden Schätzwerte T1, T2 in einem Schritt S4 miteinander verglichen. Dabei wird der Betrag einer Abweichung zwischen den beiden Schätzwerten T1, T2 bestimmt, bspw. durch Ermitteln einer Differenz zwischen dem ersten Schätzwert T1 und dem zweiten Schätzwert T2. Anhand des Ergebnisses dieses Vergleichs wird entschieden, ob ein Fehler, d.h., eine abnorme Temperatur an der Bremsanlage 4 vorliegt. Dazu wird die ermittelte Abweichung mit einem vorbestimmten Schwellwert Δ verglichen. Der Schwellwert Δ ist ein Wert, den die Abweichung maximal betragen darf, damit kein Fehler erkannt wird.

Ist die Abweichung gleich zu oder größer als der Schwellwert Δ ("ja" in Schritt S4), wird entschieden, dass ein Fehler vorliegt. Es wird dann in einem Schritt S5 überprüft, ob der zweite Schätzwert T2 größer ist als der erste Schätzwert T1. Wenn der zweite Schätzwert T2 größer ist als der erste Schätzwert T1 ("ja" in Schritt S5), wird in einem Schritt S6 eine Fehlermeldung ausgegeben, dass ein Fehler an der Bremsanlage 4 vorliegt. Die Ausgabe der Fehlermeldung kann über eine Warnleuchte an den Fahrer des Kraftfahrzeugs oder durch einen Warntext für den Fahrer oder auf jede andere geeignete Art und Weise erfolgen. Anschließend wird das Verfahren beendet.

Wenn der zweite Schätzwert T2 kleiner ist als der erste Schätzwert T1, wird in einem Schritt S7 eine Fehlermeldung ausgegeben, dass ein Messfehler und/oder ein Fehler im Messsystem vorliegt. Anschließend wird das Verfahren beendet.

Ist die Abweichung kleiner als der Schwellwert Δ ("nein" in Schritt S4), wird entschieden, dass kein abnormes Temperaturverhalten vorliegt, und das Verfahren beendet.

Ein Durchlauf des Verfahrens wird schleifenartig wiederholt, solange das Fahrzeug aktiv in Betrieb ist.

Ein solches Verfahren wird von einer Signalverarbeitungseinheit durchgeführt. Wie oben beschrieben, kann die Signalverarbeitungseinheit separat von der Steuerung 6 der Bremsanlage 4 (siehe Fig. 1) vorgesehen sein oder in die Steuerung 6 integriert sein. Die Signalverarbeitungseinheit kann bspw. in die Steuereinheit 10 der Steuerung 6 integriert sein.

In weiteren Ausführungsformen ist es denkbar, dass die Funktion in Schritt S3, welche auf die Reihe von Temperaturmesswerten (TR) angewendet wird, mindestens einen Funktionsparameter aufweist, der auf unterschiedliche Weise bestimmt werden kann.

Eine Möglichkeit zur Bestimmung des Funktionsparameters bzw. der Funktionsparameter ist eine experimentelle Bestimmung bzw. durch Messungen, bspw. in Form von Fahrzeugmessungen auf einem Prüfstand. Der so bestimmte Funktionsparameter wird dann in einem Fahrzeugdatensatz gespeichert und kann von dort während des Verfahrens abgerufen werden.

Eine weitere Möglichkeit zur Bestimmung des Funktionsparameters bzw. der Funktionsparameter ist eine rechnerische Bestimmung, bspw. mittels computerbasierten Simulationen. Der so bestimmte Funktionsparameter wird dann in dem Fahrzeugdatensatz gespeichert und kann von dort während des Verfahrens abgerufen werden.

Noch eine weitere Möglichkeit zur Bestimmung des Funktionsparameters bzw. der Funktionsparameter ist durch einen Lernprozess. Der Lernprozess startet hierbei mit einem vorbestimmten Initialwert für den Funktionsparameter, der durch mehrere Lernzyklen während des Lernprozesses anhand der ersten und zweiten Schätzwerte T1, T2 angepasst wird. Nach Abschluss des Lernprozesses wird der so bestimmte Funktionsparameter in dem Fahrzeugdatensatz gespeichert und kann von dort während des Verfahrens abgerufen werden. Ein solcher Lernprozess kann auf unterschiedliche Weise gestartet werden, bspw. wird dieser bereits bei der EoL-Prüfung (EoL = End of Line) freigegeben oder er ist bei neuen Steuerungsgeräten vorab freigegeben oder er kann über eine Diagnoseverfahren des Fahrzeugs gestartet werden.

Die Abweichung zwischen den beiden Schätzwerten T1, T2 kann, wie in dem in Fig. 2 gezeigten Ausführungsbeispiel, basierend auf dem Betrag der Differenz zwischen dem ersten Schätzwert T1 und dem zweiten Schätzwert T2 ermittelt werden. Hierbei ist der Schwellwert $\Delta$ eine Temperaturangabe. Alternativ ist es aber auch denkbar, die Abweichung im Verhältnis zum ersten Schätzwert T1 prozentual anzugeben, In diesem Fall ist der Schwellwert $\Delta$ eine Prozentangabe und berechnet sich gemäß nachstehender Formel (1):

$$(|T1-T2|)/T1*100 \qquad (1)$$

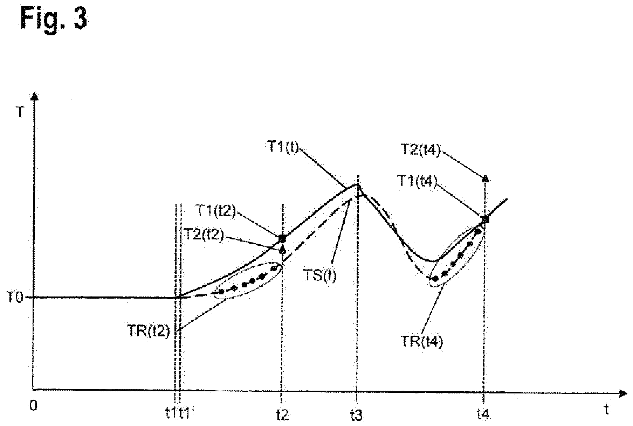

Fig. 3 zeigt ein Temperaturdiagramm, in welchem ein beispielhafter Temperaturverlauf T1(t) des ersten Schätzwertes T1 und ein beispielhafter Temperaturverlauf TS(t) der zugehörigen Temperatur TS des Temperatursensors 32 über die Zeit dargestellt sind.

Zu Beginn eines Betriebs des Fahrzeugs entspricht sowohl der erste Schätzwert T1 als auch die Temperatur TS des Temperatursensors 32 der Umgebungstemperatur T0, da die Bremse noch nicht mit einem Bremsdruck beaufschlagt wurde und sozusagen noch "kalt" ist. An einem Zeitpunkt t1 wird ein Bremsdruck an der Bremsanlage 4 angelegt und der erste Schätzwert T1 steigt entsprechend an. Zum Zeitpunkt t3 ist der Bremsvorgang beendet, d.h. es liegt kein Bremsdruck mehr an der Bremsanlage 4 an, und die Bremstemperatur TB sinkt wieder. Der Verlauf des Schätzwertes T1 basiert zu den Zeiten ohne aktiv angelegten Bremsdruck auf der Abkühlungscharakteristik der Bremsanlage 4.

Der Verlauf der Temperatur TS des Temperatursensors 32 beginnt erst leicht verzögert zu einem Zeitpunkt t1' anzusteigen, da der Temperatursensor 32 beabstandet zur Bremsanlage 4 angeordnet ist. Eine Temperaturzunahme an der Bremsanlage 4 führt erst mit leichter zeitlicher Verzögerung auch zu einer Temperaturzunahme am Temperatursensor 32. Im gesamten ist zu erkennen, dass der Temperaturverlauf TS(t) der Temperatur TS des Temperatursensors 32 Temperaturzunahmen und -abnahmen unter Normalbedingungen immer zeitlich leicht verzögert zum Kurvenverlauf T1(t) aufweist.

Basierend auf der Reihe von Temperaturwerten TR(t2) wird für den Zeitpunkt t2 ein zweiter Schätzwert T2(t2) ermittelt. Dafür wird in der beispielhaften Ausführungsform der Fig. 3 der Trend von 6 kürzlich erfassten Messwerten des Temperatursensors 32 berücksichtigt. Auf Basis dieses Trends wird der zweite Schätzwert T2(t2) bestimmt. insbesondere erfolgt die Bestimmung des zweiten Schätzwerts über eine Funktion, die den Gradienten der Kurve durch die berücksichtigen Messwerte als Eingangsgröße hat. Dieser Ansatz macht sich folgende Überlegung zu Nutze. Eine Erwärmung der Bremse, d.h. eine Erhöhung der Bremstemperatur, führt zu einer zeitlich verzögerten Erhöhung der an dem Temperatursensor gemessenen Temperatur TS. Allerdings beinhaltet der Gradient der momentan gemessenen Temperatur TS schon eine Information, wie hoch die Bremstemperatur TB in der Bremsanlage gerade ist. Eine vergleichsweise hohe Bremstemperatur TB geht mit einem vergleichsweise hohen Gradienten einher. Durch Experimente, Simulationen oder Lernprozesse kann ermittelt werden, welcher Gradient an dem Temperatursensor mit welcher Bremstemperatur zusammenhängt. Es kann somit aus dem Gradienten und/oder anderer Information in der Reihe von Temperaturwerten TR eine gute Schätzung für die Bremstemperatur erfolgen.

Für die gezeigten Temperaturverläufe ist der zweiter Schätzwert T2(t2) zum Zeitpunkt t2 sehr nahe an dem ersten Schätzwert T1 (t2). Hier ist die Differenz kleiner als der Schwellwert $\Delta$. Daher wird im Verfahren in Schritt S4 entschieden, dass zum Zeitpunkt t2 kein Fehler vorliegt.

Basierend auf der Reihe von Temperaturwerten TR(t4) wird für den Zeitpunkt t4 ein zweiter Schätzwert T2(t4) ermittelt, welcher deutlich über dem ersten Schätzwert T1 (t4) liegt. Hier ist die Differenz größer als der Schwellwert $\Delta$. Daher wird im Verfahren in Schritt S4 entschieden, dass zum Zeitpunkt t4 ein Fehler vorliegt. in Schritt S5 des Verfahrens wird für den Zeitpunkt t4 entschieden, dass der Fehler an der Bremsanlage 4 vorliegt, da T2(t4) größer ist als T1 (t4), und die entsprechende Fehlermeldung wird ausgegeben (Schritt S6). Zum Zeitpunkt t4 zeigt der zweite Schätzwert T2(t4) an, dass die in der Bremsanlage vorhanden Bremstemperatur TB deutlich über dem Wert ist, der bei normalem Funktionieren zu erwarten wäre, nämlich deutlich über dem ersten Schätzwert T1(t4). Dieses Ergebnis des Vergleichs führt zu der Schlussfolgerung, dass ein fehlerhafter Betrieb der Bremsanlage vorliegt.

BEZUGSZEICHENLISTE

| | |
|---|---|
| 2 | Bremssystem |
| 4 | Bremsanlage |

| | |
|---|---|
| 6 | Steuerung |
| 8 | Verzögerungsgeber |
| 9 | Rad |
| 10 | Steuereinheit |
| 12 | Ventilanordnung |
| 14 | elektrische Verbindung |
| 16 | Druckluftleitung |
| 18 | Bremspedal |
| 20 | elektrischer Sensor |
| 22 | pneumatischer Sensor |
| 24 | elektrische Signalleitung |
| 26 | Druckluftvorrat |
| 28 | Druckluftleitung |
| 30 | Radgeschwindigkeitssensor |
| 32 | Temperatursensor |

| | |
|---|---|
| T0 | Umgebungstemperatur |
| T1 | erster Schätzwert |
| T2 | zweiter Schätzwert |
| TR | Reihe von Temperaturmesswerten |
| TS | Temperatur des Sensors |
| $\Delta$ | Schwellwert |

| | |
|---|---|
| T1 (t) | Kurvenverlauf von T1 über die Zeit |
| TS(t) | Kurvenverlauf von TS über die Zeit |

| | |
|---|---|
| S1, S2, S3, S4, S5, S6, S7 | Verfahrensschritte |
| t1, t1', t2, t3, t4 | Zeitpunkte |

**Patentansprüche**

1. Verfahren zur Fehlererkennung in einer Bremsanlage (4) eines Kraftfahrzeugs, wobei das Verfahren die folgenden Schritte aufweist:

   Ermitteln eines ersten Schätzwerts (T1) einer momentanen Bremstemperatur anhand eines angelegten Bremsdrucks;
   Erfassen einer Reihe von Temperaturmesswerten (TR) durch einen zur Bremsanlage (4) beabstandet angeordneten Temperatursensor (32);
   Bestimmen eines zweiten Schätzwerts (T2) der momentanen Bremstemperatur basierend auf der Reihe von Temperaturmesswerten (TR), wobei das Bestimmen des zweiten Schätzwerts (T2) der momentanen Bremstemperatur basierend auf vergangenen Temperaturmesswerten der Reihe von Temperaturmesswerten (TR) und einer Extrapolationsfunktion durchgeführt wird;
   Vergleichen des ersten Schätzwerts (T1) und des zweiten Schätzwerts (T2); und
   basierend auf dem Vergleichen des ersten und zweiten Schätzwerts (T1, T2), Entscheiden, ob ein Fehler vorliegt.

2. Verfahren nach Anspruch 1, wobei das Ermitteln des ersten Schätzwerts (T1) der Bremstemperatur anhand des angelegten Bremsdrucks und einer momentanen Radgeschwindigkeit durchgeführt wird.

3. Verfahren nach einem der vorhergehenden Ansprüche, wobei das Bestimmen des zweiten Schätzwerts (T2) der Bremstemperatur basierend auf einem Gradienten durchgeführt wird, wobei der Gradient anhand der Reihe von Temperaturmesserwerten (TR) ermittelt wird.

4. Verfahren nach einem der Ansprüche 1 bis 3, wobei entschieden wird, dass ein Fehler vorliegt, wenn der zweite Schätzwert (T2) von dem ersten Schätzwert (T1) zumindest um eine vorbestimmte Abweichung ($\Delta$) verschieden ist.

5. Verfahren nach Anspruch 4, wobei die vorbestimmte Abweichung ($\Delta$) mindestens 10%, insbesondere zwischen 10% und 30%, weiter insbesondere 20%, des ersten Schätzwerts (T1) beträgt.

**6.** Verfahren nach einem der vorhergehenden Ansprüche, wobei die Funktion mindestens einen Funktionsparameter aufweist und wobei der mindestens eine Funktionsparameter mindestens ein experimentell bzw. durch Messung bestimmter Parameter ist.

**7.** Verfahren nach einem der vorhergehenden Ansprüche, wobei die Funktion mindestens einen Funktionsparameter aufweist und wobei der mindestens eine Funktionsparameter mindestens ein rechnerisch bzw. mittels computerbasierter Simulation bestimmter Parameter ist.

**8.** Verfahren nach einem der vorhergehenden Ansprüche, wobei die Funktion mindestens einen Funktionsparameter aufweist und wobei der mindestens eine Funktionsparameter ein durch einen Lernprozess bestimmter Parameter ist.

**9.** Verfahren nach Anspruch 8, wobei der mindestens eine Funktionsparameter einen Initialwert besitzt, der in einer Mehrzahl von Zyklen basierend auf den ersten und zweiten Schätzwerten angepasst wird.

**10.** Kraftfahrzeug-Bremssystem (2), mit:

einer Bremsanlage (4);
einer Steuerung (6) zur Aufbringung eines Bremsdrucks in der Bremsanlage (4);
einem Sensor (32), welcher beabstandet zur Bremsanlage (4) angeordnet ist und zum Erfassen einer Reihe von Temperaturmesswerten (TR) ausgelegt ist; und
einer Signalverarbeitungseinheit,
wobei die Signalverarbeitungseinheit ausgelegt ist:

einen ersten Schätzwerts (T1) einer momentanen Bremstemperatur anhand eines angelegten Bremsdrucks zu ermitteln;
einen zweiten Schätzwerts (T2) der momentanen Bremstemperatur basierend auf der Reihe von Temperaturmesswerten (TR) zu bestimmen, wobei die Signalverarbeitungseinheit ausgelegt ist, den zweiten Schätzwert (T2) der momentanen Bremstemperatur basierend auf vergangenen Temperaturmesswerten der Reihe von Temperaturmesswerten (TR) und einer Extrapolationsfunktion zu bestimmen;

den ersten Schätzwerts (T1) und den zweiten Schätzwerts (T2) zu vergleichen; und
basierend auf dem Vergleichen des ersten und zweiten Schätzwerts (T1, T2), zu entscheiden, ob ein Fehler vorliegt.

**11.** Kraftfahrzeug-Bremssystem (2) nach Anspruch 10, wobei der Sensor (32) an einem Radträger, einem Bremsanker oder auf einer Radachse des Kraftfahrzeugs angeordnet ist.

**12.** Kraftfahrzeug-Bremssystem (2) nach Anspruch 10 oder 11, wobei die Signalverarbeitungseinheit und die Steuerung (6) integral miteinander oder separat zueinander ausgebildet sind.

**Claims**

**1.** Method for identifying faults in a brake assembly (4) of a motor vehicle, wherein the method has the following steps:

ascertaining a first estimated value (T1) of an instantaneous brake temperature on the basis of an applied brake pressure;
acquiring a series of measured temperature values (TR) by means of a temperature sensor (32) that is arranged at a distance from the brake assembly (4);
determining a second estimated value (T2) of the instantaneous brake temperature based on the series of measured temperature values (TR), wherein the determining of the second estimated value (T2) of the instantaneous brake temperature is carried out based on past measured temperature values of the series of measured temperature values (TR) and an extrapolation function;
comparing the first estimated value (T1) and the second estimated value (T2); and
deciding whether a fault is present based on the comparison of the first and the second estimated value (T1, T2).

**2.** Method according to claim 1, wherein the ascertaining of the first estimated value (T1) of the brake temperature is carried out based on the applied brake pressure and an instantaneous wheel speed.

**3.** Method according to any one of the preceding claims, wherein the determining of the second estimated value (T2) of the brake temperature is carried out based on a gradient which is ascertained based on the series of measured temperature values (TR).

**4.** Method according to any one of claims 1 to 3, wherein it is decided that a fault is present if the second estimated value (T2) differs from the first estimated value (T1) by at least a predetermined deviation ($\Delta$).

**5.** Method according to claim 4, wherein the predetermined deviation ($\Delta$) is at least 10%, in particular between 10% and 30%, more particularly 20% of the first estimated value (T1).

**6.** Method according to any one of the preceding claims, wherein the function has at least one function parameter, and wherein the at least one function parameter is at least one parameter determined experimentally or by measurement.

**7.** Method according to any one of the preceding claims, wherein the function has at least one function parameter, and wherein the at least one function parameter is at least one parameter determined by computation or by computer-based simulation.

**8.** Method according to any one of the preceding claims, wherein the function has at least one function parameter, and wherein the at least one function parameter is a parameter determined by a learning process.

**9.** Method according to claim 8, wherein the at least one function parameter has an initial value that is adapted in a plurality of cycles based on the first and second estimated values.

**10.** Motor vehicle braking system (2), with:

a brake assembly (4);
a control system (6) for applying a brake pressure in the brake assembly (4);
a sensor (32) which is arranged at a distance from the brake assembly (4) and is configured to acquire a series of measured temperature values (TR); and
a signal-processing unit,
wherein the signal-processing unit is configured to
ascertain a first estimated value (T1) of an instantaneous brake temperature on the basis of an applied brake pressure;
determine a second estimated value (T2) of the instantaneous brake temperature based on the series of measured temperature values (TR), wherein the signal-processing unit is configured to determine the second estimated value (T2) of the instantaneous brake temperature based on past measured temperature values of the series of measured temperature values (TR) and an extrapolation function;
compare the first estimated value (T1) and the second estimated value (T2); and
decide whether a fault is present based on the comparison of the first and the second estimated value (T1, T2).

**11.** Motor vehicle braking system (2) according to claim 10, wherein the sensor (32) is arranged on a wheel carrier, on a brake anchor or on a wheel axle of the motor vehicle.

**12.** Motor vehicle braking system (2) according to claim 10 or 11, wherein the signal-processing unit and the control system (6) are formed integrally with one another or separately from one another.

**Revendications**

**1.** Procédé de détection de défaut dans un système de freinage (4) d'un véhicule à moteur, dans lequel le procédé présente les étapes suivantes :

détermination d'une première valeur estimée (T1) d'une température de freinage instantanée à l'aide d'une pression de freinage appliquée ;
détection d'une série de valeurs de mesure de température (TR) par un capteur de température (32) disposé à distance du système de freinage (4) ;
détermination d'une seconde valeur estimée (T2) de la température de freinage instantanée sur la base de la série de valeurs de mesure de température (TR), dans lequel la détermination de la seconde valeur estimée (T2) de la température de freinage instantanée est effectuée sur la base de valeurs de mesure de température passées de la série de valeurs de mesure de température (TR) et d'une fonction d'extrapolation ;

comparaison de la première valeur estimée (T1) et de la seconde valeur estimée (T2) ; et

sur la base de la comparaison de la première et de la seconde valeur estimée (T1, T2), décision à propos de l'existence ou non d'un défaut.

2. Procédé selon la revendication 1, dans lequel la détermination de la première valeur estimée (T1) de la température de freinage est effectuée à l'aide de la pression de freinage appliquée et d'une vitesse de roue instantanée.

3. Procédé selon l'une quelconque des revendications précédentes, dans lequel la détermination de la seconde valeur estimée (T2) de la température de freinage est effectuée sur la base d'un gradient, dans lequel le gradient est déterminé à l'aide de la série de valeurs de mesure de température (TR).

4. Procédé selon l'une quelconque des revendications 1 à 3, dans lequel il est décidé qu'il existe un défaut si la seconde valeur estimée (T2) diffère de la première valeur estimée (T1) selon au moins un écart prédéterminé ($\Delta$).

5. Procédé selon la revendication 4, dans lequel l'écart prédéterminé ($\Delta$) est d'au moins 10 %, en particulier entre 10 % et 30 %, plus particulièrement 20 %, de la première valeur estimée (T1).

6. Procédé selon l'une quelconque des revendications précédentes, dans lequel la fonction présente au moins un paramètre fonctionnel et dans lequel le au moins un paramètre fonctionnel est au moins un paramètre déterminé expérimentalement ou par mesure.

7. Procédé selon l'une quelconque des revendications précédentes, dans lequel la fonction présente au moins un paramètre fonctionnel et dans lequel le au moins un paramètre fonctionnel est au moins un paramètre déterminé par calcul ou par simulation assistée par ordinateur.

8. Procédé selon l'une quelconque des revendications précédentes, dans lequel la fonction présente au moins un paramètre fonctionnel et dans lequel le au moins un paramètre fonctionnel est un paramètre déterminé par un processus d'apprentissage.

9. Procédé selon la revendication 8, dans lequel le au moins un paramètre fonctionnel comporte une valeur initiale qui est adaptée dans une pluralité de cycles sur la base des première et seconde valeurs estimées.

10. Système de freinage de véhicule à moteur (2), avec :

un système de freinage (4) ;
un dispositif de commande (6) pour appliquer une pression de freinage dans le système de freinage (4) ;
un capteur (32) qui est disposé à distance du système de freinage (4) et conçu pour acquérir une série de valeurs de mesure de température (TR) ; et
une unité de traitement de signal,
dans lequel l'unité de traitement de signal est conçue pour :

déterminer une première valeur estimée (T1) d'une température de freinage instantanée à l'aide d'une pression de freinage appliquée ;
déterminer une seconde valeur estimée (T2) de la température de freinage instantanée sur la base de la série de valeurs de mesure de température (TR), dans lequel l'unité de traitement de signal est conçue pour déterminer la seconde valeur estimée (T2) de la température de freinage instantanée sur la base de valeurs de mesure de température passées de la série de valeurs de mesure de température (TR) et d'une fonction d'extrapolation ;
comparer la première valeur estimée (T1) et la seconde valeur estimée (T2) ; et
sur la base de la comparaison de la première et de la seconde valeur estimée (T1, T2), décider de l'existence ou non d'un défaut.

11. Système de freinage de véhicule à moteur (2) selon la revendication 10, dans lequel le capteur (32) est disposé sur un support de roue, une armature de freinage ou sur un axe de roue du véhicule à moteur.

**12.** Système de freinage de véhicule à moteur (2) selon la revendication 10 ou 11, dans lequel l'unité de traitement de signal et le dispositif de commande (6) sont formés d'un seul tenant l'un avec l'autre ou séparément l'un de l'autre.

**Fig. 1**

# Fig. 2

```
                              ┌─────────┐
                              │  Start  │
                              └─────────┘
                                   │
                                   ▼
              ┌──────────────────────────────────────┐
       S1 ────┤            T1 ermitteln               │
              └──────────────────────────────────────┘
                                   │
                                   ▼
              ┌──────────────────────────────────────┐
       S2 ────┤            TR erfassen                │
              └──────────────────────────────────────┘
                                   │
                                   ▼
              ┌──────────────────────────────────────┐
       S3 ────┤            T2 ermitteln               │
              └──────────────────────────────────────┘
                                   │
                                   ▼
       S4 ───◇      | T1-T2 | ≥ Δ ?          ◇──── nein
                                   │                    │
                                  ja                    │
                                   ▼                    │
       S5 ───◇          T2 > T1 ?             ◇         │
         nein ──┐                 │                     │
                │                ja                     │
                ▼                 ▼                     │
    ┌──────────────────┐  ┌──────────────────┐         │
 S7 │  Fehlermeldung   │  │  Fehlermeldung   │ S6      │
    │ Messfehler       │  │ Bremsanlage      │         │
    │ ausgeben         │  │ ausgeben         │         │
    └──────────────────┘  └──────────────────┘         │
              │                    │                    │
              └──────────┬─────────┘                    │
                         ▼                              │
                    ┌─────────┐                         │
                    │  Ende   │◄────────────────────────┘
                    └─────────┘
```

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3354523 A1
- US 2019023252 A1
- DE 102016115275 A1